# EUROPÄISCHE PATENTANMELDUNG

(11) **EP 4 350 222 A1**
(43) Veröffentlichungstag der Anmeldung: **10.04.2024**
(21) Anmeldenummer: 23195063.5
(22) Anmeldetag: 04.09.2023
(51) Int. Cl.: F24C 15/20, A47J 37/07

(54) **GARSYSTEM MIT EINEM GRILL UND EINER DUNSTABZUGSVORRICHTUNG SOWIE VERFAHREN ZUM BETRIEB EINES GARSYSTEMS**

(30) Priorität: 04.10.2022 BE 202205796
(71) Anmelder: Miele & Cie. KG, 33332 Gütersloh (DE)
(72) Erfinder: Junkereit, Andre, 32257 Bünde (DE); Stahl, Hermann, 32289 Rödinghausen (DE); Ennen, Volker, Dr., 32257 Bünde (DE); Ebke, Daniel, Dr., 33613 Bielefeld (DE); Böhm, Christian, Dr., 49377 Vechta (DE)

(57) **Zusammenfassung**

Die Erfindung betrifft ein Garsystem (2), umfassend einen Grill (4) mit einem Grillrost (6) zur Auflage eines zu garenden Garguts und einer unterhalb des Grillrosts (6) angeordneten Heizvorrichtung (8) zur Beheizung des Grillrosts (6), eine Dunstabzugsvorrichtung (10) mit einem Gebläse (12) zur Absaugung von über dem Grill (4) aufsteigenden Wrasen und eine Steuerung zur Ansteuerung des Gebläses (12) der Dunstabzugsvorrichtung (10), wobei das Garsystem (2) eine mit der Steuerung signalübertragend verbundene Flammdetektionsvorrichtung (14) zur Detektion einer Flammenbildung an dem Grill (4) aufweist und das Gebläse (12) in Abhängigkeit einer Flammenbildung an dem Grill (4) mittels der Steuerung automatisch ausschaltbar ist.

Ferner betrifft die Erfindung ein Verfahren zum Betrieb eines Garsystems (2).

## Beschreibung

Die Erfindung betrifft ein Garsystem mit einem Grill und einer Dunstabzugsvorrichtung sowie ein Verfahren zum Betrieb eines Garsystems.

Wenn Fett auf einem Grill zur Zubereitung eines auf einem Grillrost des Grills abgelegten Grillguts auf die Heizvorrichtung des Grills, beispielsweise heiße Heizstäbe oder Lavasteine, tropft, kann es zu einer Flammenbildung kommen. Wenn ein über dem Grill aufsteigender Wrasen mittels einer Dunstabzugsvorrichtung, zum Beispiel mittels eines in unmittelbarer Nähe des Grills angeordneten Tischlüfters oder dergleichen, abgesaugt würde, könnte diese Flamme in die Dunstabzugsvorrichtung in ungewünschter Weise eingesaugt werden. Dabei besteht beispielsweise die Gefahr der Entzündung eines fettigen Filters der Dunstabzugsvorrichtung. Aufgrund dieser Problematik ist eine Kombination aus einem Grill und einer Dunstabzugsvorrichtung, zum Beispiel dem oben genannten Tischlüfter, bislang nicht möglich.

Der Erfindung stellt sich somit das Problem, ein Garsystem mit einem Grill und einer dem Grill funktional zugeordneten Dunstabzugsvorrichtung sowie ein Verfahren zum Betrieb eines Garsystems anzugeben, bei denen die vorgenannte Problematik nicht auftritt.

Erfindungsgemäß wird dieses Problem durch ein Garsystem mit den Merkmalen des Patentanspruchs 1 gelöst. Das erfindungsgemäße Garsystem umfasst dabei einen Grill mit einem Grillrost zur Auflage eines zu garenden Garguts und einer unterhalb des Grillrosts angeordneten Heizvorrichtung zur Beheizung des Grillrosts, eine Dunstabzugsvorrichtung mit einem Gebläse zur Absaugung von über dem Grill aufsteigenden Wrasen und eine Steuerung zur Ansteuerung des Gebläses der Dunstabzugsvorrichtung, wobei das Garsystem eine mit der Steuerung signalübertragend verbundene Flammdetektionsvorrichtung zur Detektion einer Flammenbildung an dem Grill aufweist und das Gebläse in Abhängigkeit einer Flammenbildung an dem Grill mittels der Steuerung automatisch ausschaltbar ist. Ferner wird dieses Problem durch ein Verfahren zum Betrieb eines Garsystems mit den Merkmalen des Patentanspruchs 13 gelöst. Wie bereits oben erläutert, kann die Dunstabzugsvorrichtung als ein Tischlüfter oder dergleichen ausgebildet sein. Die als Tischlüfter ausgebildete Dunstabzugsvorrichtung wäre, wie bei Tischlüftern üblich, benachbart zu dem Grill des erfindungsgemäßen Garsystems in einer gemeinsamen Tischplatte von Grill und Tischlüfter angeordnet. Grundsätzlich sind aber auch erfindungsgemäße Garsysteme denkbar, bei denen die Dunstabzugsvorrichtung beispielsweise oberhalb des Grills angeordnet ist.

Vorteilhafte Ausgestaltungen und Weiterbildungen der Erfindung ergeben sich aus den nachfolgenden Unteransprüchen.

Der mit der Erfindung erreichbare Vorteil besteht insbesondere darin, dass ein Garsystem mit einem Grill und einer dem Grill funktional zugeordneten Dunstabzugsvorrichtung sowie ein Verfahren zum Betrieb eines Garsystems angegeben sind, bei denen die vorgenannte Problematik, nämlich die Entzündung der dem Grill funktional zugeordneten Dunstabzugsvorrichtung, zum Beispiel eines fettigen Fettfilters der Dunstabzugsvorrichtung, wirksam verhindert ist.

Grundsätzlich ist das erfindungsgemäße Garsystem nach Art, Funktionsweise, Material und Dimensionierung in weiten geeigneten Grenzen frei wählbar. Siehe beispielsweise die diesbezüglichen Ausführungen zur Ausbildung und Anordnung der Dunstabzugsvorrichtung des erfindungsgemäßen Garsystems. Ferner kann die Steuerung zur Auswertung von Ausgangssignalen der Flammdetektionsvorrichtung und zur Ansteuerung des Gebläses der Dunstabzugsvorrichtung beispielsweise an dem Grill und/oder an der Dunstabzugsvorrichtung und/oder an einem Drittgerät des erfindungsgemäßen Garsystems angeordnet sein.

Eine vorteilhafte Weiterbildung des erfindungsgemäßen Garsystems sieht vor, dass die Flammdetektionsvorrichtung auf Basis einer Ionisationsmessung ausgebildet ist. Auf lonisationsmessungen basierende Systeme sind beispielsweise besonders schnell und sehr zuverlässig. Dabei wird beispielsweise zwischen zwei voneinander beabstandet angeordneten Messelektroden der Flammdetektionsvorrichtung eine Wechselspannung angelegt. Wenn durch eine Flamme eine lonisation eines zwischen den beiden Messelektroden befindlichen Gases erfolgt, kann dies anhand eines Stromflusses (AC und/oder DC) zwischen den beiden Messelektroden detektiert werden. Selbstverständlich sind jedoch auch andere Arten von geeigneten Flammdetektionsvorrichtungen denkbar.

Eine weitere vorteilhafte Weiterbildung des erfindungsgemäßen Garsystems sieht vor, dass die Flammdetektionsvorrichtung an dem Grill angeordnet ist, bevorzugt, dass die Flammdetektionsvorrichtung, jeweils mit Abstand, zwischen dem Grillrost und der Heizvorrichtung angeordnet ist, besonders bevorzugt, dass die Flammdetektionsvorrichtung derart unterhalb des Grillrosts angeordnet ist, dass die Flammdetektionsvorrichtung, bezogen auf eine Draufsicht auf den Grillrost, im Wesentlichen von dem Grillrost überdeckt ist. Hierdurch ist die Flammdetektion in unmittelbarer Nähe des Grills möglich, also dort, wo Flammen entstehen. Die Flammdetektion erfolgt somit oberhalb der Heizvorrichtung, beispielsweise dem Heizkörper oder der Lavasteine, und unterhalb der Lebensmittel, nämlich des auf dem Grillrost aufgelegten Garguts. Darüber hinaus weist die besonders bevorzugte Ausführungsform dieser Weiterbildung den weiteren Vorteil auf, dass die Flammdetektionsvorrichtung durch den Grillrost im Wesentlichen vor herabtropfendem Fett oder dergleichen geschützt ist.

Eine vorteilhafte Weiterbildung der vorgenannten Ausführungsform des erfindungsgemäßen Garsystems sieht vor, dass die Flammdetektionsvorrichtung eine Mehrzahl von Messelektroden aufweist, wobei mindestens eine der Messelektroden jeweils unterhalb einer Roststrebe der Mehrzahl von parallel zueinander angeordneten Roststreben des Grillrosts angeordnet ist, bevorzugt, dass die Mehrzahl der Messelektroden als mindestens zwei ineinandergreifende Kammstrukturen ausgebildet ist, besonders bevorzugt, dass jeweils zwei benachbarte Messelektroden einem der Roststrebe zugeordnet sind. Auf diese Weise ist die Flammdetektion direkt an dem Ort einer potentiellen Flammenbildung angeordnet, wobei die Ausbildung der Flammdetektionsvorrichtung mit einer Mehrzahl von Messelektroden eine sehr flexible und damit auf die Erfordernisse des jeweiligen Einzelfalls abgestimmte Anordnung der Flammdetektionsvorrichtung ermöglicht. Dies gilt besonders für die bevorzugte und insbesondere für die besonders bevorzugte Ausführungsform dieser Weiterbildung.

Eine vorteilhafte Weiterbildung der letztgenannten Weiterbildung des erfindungsgemäßen Garsystems sieht vor, dass die Roststreben an deren jeweiligen Längsseiten Abtropfkanten aufweisen. Die Messelektroden inklusive gegebenenfalls vorhandener Signalübertragungsverbindungen beispielsweise der Kammstrukturen sind gegen von oben herabtropfendem Fett durch die Roststreben und einen die einzelnen Roststreben verbindenden Rahmen des Grillrosts geschützt. Mittels der Abtropfkanten ist dieser Schutz der Messelektroden vor herabtropfendem Fett wesentlich verbessert, da ein Herablaufen des herabtropfenden Fettes entlang der Längsseiten der Roststreben auf die unterhalb der Roststreben angeordneten Messelektroden wirksam verhindert ist.

Eine vorteilhafte Weiterbildung des erfindungsgemäßen Garsystems nach Anspruch 4 oder 5 sieht vor, dass die Roststreben zueinander mindestens derart eng beabstandet angeordnet sind, dass ein Hindurchstecken eines menschlichen Fingers zwischen zwei benachbarten Roststreben wirksam verhindert ist. Hierdurch ist die Funktionalität des Grillrosts um die Funktion eines Berührschutzes, beispielsweise für die Messelektroden der Flammdetektionsvorrichtung, erweitert. Der Abstand der Messelektroden vom Grillrost kann darüber hinaus derart geringgehalten werden, dass eine Berührung mittels schräg zwischen den Roststreben des Grillrosts hindurchgeführter Gegenstände wirksam unterbunden ist. Insbesondere wenn mehrere Messelektroden unterhalb einer Roststrebe angeordnet sind, kann die jeweilige Roststrebe, mit Blickrichtung von unten, konkav ausgeführt sein, so dass die Messelektroden von drei Seiten durch die Roststreben des Gitterrosts gegen Berührung abgeschirmt sind.

Eine vorteilhafte Weiterbildung des erfindungsgemäßen Garsystems nach einem der Ansprüche 3 bis 6 sieht vor, dass zwischen dem Grillrost und der Flammdetektionsvorrichtung zusätzlich mindestens ein Isoliermittel zur elektrischen Isolierung der Flammdetektionsvorrichtung von dem Grillrost angeordnet ist. Auf diese Weise ist beispielsweise auch bei verbogenen Messelektroden und/oder Roststreben des Grillrosts gewährleistet, dass zwischen den Messelektroden und/oder den Roststreben des Grillrosts kein elektrisch leitender Kontakt entstehen kann. Das mindestens eine Isoliermittel kann als ein oder mehrere elektrisch isolierende Elemente ausgebildet sein, das oder die ganz oder teilweise zwischen den Messelektroden und dem Grillrost angeordnet wird/werden. Das mindestens eine Isoliermittel kann an den Messelektroden und/oder dem Grillrost und/oder separaten tragfähigen Strukturen des Garsystems befestigt sein.

Im Unterschied zu einer Anordnung der Flammdetektionsvorrichtung an dem Grillrost sieht eine andere vorteilhafte Weiterbildung des erfindungsgemäßen Garsystems vor, dass die Flammdetektionsvorrichtung an der Dunstabzugsvorrichtung angeordnet ist, bevorzugt, dass die Flammdetektionsvorrichtung eine Mehrzahl von Messelektroden aufweist, wobei die Mehrzahl der Messelektroden als mindestens zwei ineinandergreifende Kammstrukturen oder als voneinander beabstandete Flächenelektroden ausgebildet ist. Hierdurch kann die Flammdetektion möglichst nahe an einer Stelle erfolgen, an der die Flammen in die Dunstabzugsvorrichtung eingezogen werden. Das kann beispielsweise an oder in der Dunstabzugsvorrichtung, zum Beispiel am oder im Tischlüfter, sein. Das Ergebnis der Messung beispielsweise im/am Tischlüfter kann direkt an die zum Beispiel in dem Tischlüfter angeordnete Steuerung zur Ansteuerung eines Motors des Gebläses des Tischlüfters weitergegeben werden. Dort wird auf das Signal reagiert. Es muss keine Signalübertragung zwischen zwei oder mehreren Komponenten des erfindungsgemäßen Garsystems, beispielsweise dem Grill und der Dunstabzugsvorrichtung, stattfinden.

Eine vorteilhafte Weiterbildung der vorgenannten Ausführungsform des erfindungsgemäßen Garsystems sieht vor, dass die Flammdetektionsvorrichtung an einem Fettfilter der Dunstabzugsvorrichtung oder an einer Wrasenleitvorrichtung der Dunstabzugsvorrichtung mit einer Mehrzahl von parallel zueinander angeordneten Leitstreben angeordnet ist, bevorzugt, dass die Mehrzahl von Leitstreben gleichzeitig als die Mehrzahl von Messelektroden ausgebildet ist oder jeweils mindestens eine der Messelektroden an oder in mindestens einer der Leitstreben angeordnet ist. Auf diese Weise ist die Anordnung der Flammdetektionsvorrichtung auf konstruktiv und fertigungstechnisch sehr einfache Art realisierbar, da die Flammdetektionsvorrichtung an oder in einer bereits vorhandenen Struktur der Dunstabzugsvorrichtung anordenbar ist. Entsprechend lassen sich Synergieeffekte nutzen. Dies gilt insbesondere für die bevorzugte Ausführungsform dieser Weiterbildung. Ferner hat eine Anordnung der Flammdetektionsvorrichtung an oder in der Wrasenleitvorrichtung den weiteren Vorteil, dass die Flammdetektionsvorrichtung in Strömungsrichtung des Wrasens noch vor dem Fettfilter erfolgt.

Eine dazu alternative vorteilhafte Weiterbildung des erfindungsgemäßen Garsystems nach Anspruch 8 sieht vor, dass die Flammdetektionsvorrichtung als eine separate Flammdetektionsvorrichtung zwischen der Wrasenleitvorrichtung und dem Fettfilter angeordnet ist, bevorzugt, dass die separate Flammdetektionsvorrichtung klappbar oder verschiebbar an einem Rest der Dunstabzugsvorrichtung befestigt ist, besonders bevorzugt, dass die separate Flammdetektionsvorrichtung an dem als entnehmbarer Fettfilter ausgebildeten Fettfilter befestigt ist. Hierdurch ist es möglich, die Flammdetektionsvorrichtung beispielsweise unabhängig von dem Fettfilter oder der Wrasenleitvorrichtung auszubilden und an der Dunstabzugsvorrichtung anzuordnen, so dass die Flammdetektionsvorrichtung in weiteren Grenzen frei gestaltbar ist. Dies gilt besonders für die bevorzugte Ausführungsform dieser Weiterbildung. Beispielsweise ist die Flammdetektionsvorrichtung aufgrund der Ausführung als separate Flammdetektionsvorrichtung leichter nachrüstbar und damit auch als Nachrüstsatz für bestehende Garsysteme vertreibbar. Darüber hinaus weist die besonders bevorzugte Ausführungsform dieser Weiterbildung den Vorteil auf, dass die Handhabung des Garsystems wesentlich vereinfacht ist.

Alternativ zu einer Anordnung der Flammdetektionsvorrichtung an dem Grill oder an der Dunstabzugsvorrichtung sieht eine weitere vorteilhafte Weiterbildung des erfindungsgemäßen Garsystems vor, dass die Flammdetektionsvorrichtung zwischen dem Grill und der Dunstabzugsvorrichtung angeordnet ist, bevorzugt, dass die Flammdetektionsvorrichtung an einem Zubehörteil des Garsystems angeordnet ist, besonders bevorzugt, dass die Flammdetektionsvorrichtung an einem als Strömungshindernis zwischen dem Grill auf der einen Seite und der Dunstabzugsvorrichtung auf der anderen Seite ausgebildeten, vorzugsweise lösbaren, klappbaren oder verschiebbaren, Zubehörteil angeordnet ist. Auf diese Weise führen kleinere Flammen im und am Grill, zum Beispiel durch kleine herabtropfende Fettspritzer, nicht sofort zum Abschalten der Dunstabzugsvorrichtung, also beispielsweise einer als Tischlüfter ausgebildeten Dunstabzugsvorrichtung, wie dies zum Beispiel bei einer Anordnung der Flammdetektionsvorrichtung im oder am Grill der Fall sein kann. Ferner muss die zu detektierende Flamme zwecks Detektion nicht bis zur Dunstabzugsvorrichtung, beispielsweise bis zum Fettfilter der Dunstabzugsvorrichtung, vordringen. Darüber hinaus ist eine derartige Flammdetektionsvorrichtung sehr leicht nachrüstbar. Die bevorzugte Ausführungsform dieser Weiterbildung hat ferner den Vorteil, dass die Flammdetektionsvorrichtung nicht separat, sondern in baulicher Verbindung mit einem Zubehörteil des Garsystems ausgebildet ist. Entsprechend sind Synergieeffekte nutzbar. Zusätzlich dazu handelt es sich bei der besonders bevorzugten Ausführungsform dieser Weiterbildung um eine insbesondere bei als Tischlüfter ausgebildeten Dunstabzugsvorrichtungen sehr sinnvolles Zubehörteil. Beispielsweise ist mittels des als Strömungshindernis ausgebildeten Zubehörteils eine sehr wirksame bauliche Barriere gegen Flammen realisierbar.

Eine andere vorteilhafte Weiterbildung des erfindungsgemäßen Garsystems sieht vor, dass die Flammdetektionsvorrichtung an dem Grillrost, der Dunstabzugsvorrichtung oder dem Zubehörteil lösbar angeordnet ist, bevorzugt, dass die Flammdetektionsvorrichtung auf der einen Seite und der Grillrost, die Dunstabzugsvorrichtung oder das Zubehörteil auf der anderen Seite derart aufeinander abgestimmt ausgebildet sind, dass eine Montage der Flammdetektionsvorrichtung an dem Grillrost, der Dunstabzugsvorrichtung oder dem Zubehörteil lediglich in einer vorher festgelegten Ausrichtung der Flammdetektionsvorrichtung relativ zu dem Grillrost, der Dunstabzugsvorrichtung oder dem Zubehörteil möglich ist. Hierdurch ist insbesondere eine Nachrüstung eines bestehenden Garsystems zu einem erfindungsgemäßen Garsystem wesentlich vereinfacht. Beispielsweise ist mittels der bevorzugten Ausführungsform dieser Weiterbildung auch eine Montage vor Ort, also beim Endkunden des erfindungsgemäßen Garsystems, leicht durchführbar.

Aufgrund der Vielzahl von denkbaren konstruktiven und fertigungstechnischen Ausbildungen des erfindungsgemäßen Garsystems ist auch das erfindungsgemäße Verfahren in weiten geeigneten Grenzen frei wählbar.

Eine vorteilhafte Weiterbildung des erfindungsgemäßen Verfahrens sieht beispielsweise vor, dass in vorher festgelegten Betriebszuständen des Garsystems und/oder in vorher festgelegten Zeitabständen und/oder bei eingeschaltetem Garsystem kontinuierlich mittels der Steuerung eine Funktionskontrolle zur Erkennung der Funktionsfähigkeit des Garsystems, insbesondere der Flammdetektionsvorrichtung, automatisch erfolgt. Auf diese Weise ist sichergestellt, dass beispielsweise eine Fehlfunktion des erfindungsgemäßen Garsystems rechtzeitig erkannt wird, so dass das erfindungsgemäße Garsystem in Abhängigkeit dieser Funktionskontrolle automatisch in einen sicheren Betriebszustand überführbar ist.

Eine besonders vorteilhafte Weiterbildung der vorgenannten Ausführungsform des erfindungsgemäßen Verfahrens sieht vor, dass nach erfolgter Erkennung einer ungenügenden Funktionsfähigkeit des Garsystems, insbesondere der Flammdetektionsvorrichtung, mittels der Steuerung eine Funktionswiederherstellung zur Herstellung dieser Funktionsfähigkeit automatisch erfolgt. Hierdurch ist nicht nur eine automatische Überführung des erfindungsgemäßen Garsystems in einen sicheren Betriebszustand, sondern zeitlich danach auch eine automatische Überführung des erfindungsgemäßen Garsystems in einen Normalzustand, also in einen Betriebszustand des erfindungsgemäßen Garsystems mit insbesondere einer ordnungsgemäß funktionierenden Flammdetektionsvorrichtung, ermöglicht.

Drei Ausführungsbeispiele der Erfindung in verschiedenen Varianten sind in den Zeichnungen rein schematisch dargestellt und werden nachfolgend näher beschrieben. Es zeigt
- Figur 1: ein erstes Ausführungsbeispiel des erfindungsgemäßen Garsystems zur Durchführung des erfindungsgemäßen Verfahrens in einer seitlichen Schnittdarstellung,
- Figur 2: eine erste Variante des ersten Ausführungsbeispiels in einer teilweisen, Vertikalschnittdarstellung,
- Figur 3: die erste Variante gemäß der Fig. 2 in einer teilweisen Horizontalschnittdarstellung,
- Figur 4: eine zweite Variante des ersten Ausführungsbeispiels in einer teilweisen, Vertikalschnittdarstellung,
- Figur 5: eine dritte Variante des ersten Ausführungsbeispiels in einer teilweisen, Vertikalschnittdarstellung,
- Figur 6: ein zweites Ausführungsbeispiel des erfindungsgemäßen Garsystems zur Durchführung des erfindungsgemäßen Verfahrens in einer seitlichen Schnittdarstellung,
- Figur 7: eine erste Variante des zweiten Ausführungsbeispiels in einer teilweisen, Vertikalschnittdarstellung,
- Figur 8: eine zweite Variante des zweiten Ausführungsbeispiels in einer teilweisen, Vertikalschnittdarstellung,
- Figur 9: eine dritte Variante des zweiten Ausführungsbeispiels in einer teilweisen, Vertikalschnittdarstellung,
- Figur 10: eine vierte Variante des zweiten Ausführungsbeispiels in einer teilweisen, Vertikalschnittdarstellung,
- Figur 11: eine fünfte Variante des zweiten Ausführungsbeispiels in einer teilweisen, Vertikalschnittdarstellung,
- Figur 12: eine sechste Variante des zweiten Ausführungsbeispiels in einer teilweisen, Vertikalschnittdarstellung,
- Figur 13: eine siebte Variante des zweiten Ausführungsbeispiels in einer teilweisen, Vertikalschnittdarstellung und
- Figur 14: ein drittes Ausführungsbeispiel des erfindungsgemäßen Garsystems zur Durchführung des erfindungsgemäßen Verfahrens in einer seitlichen Schnittdarstellung.

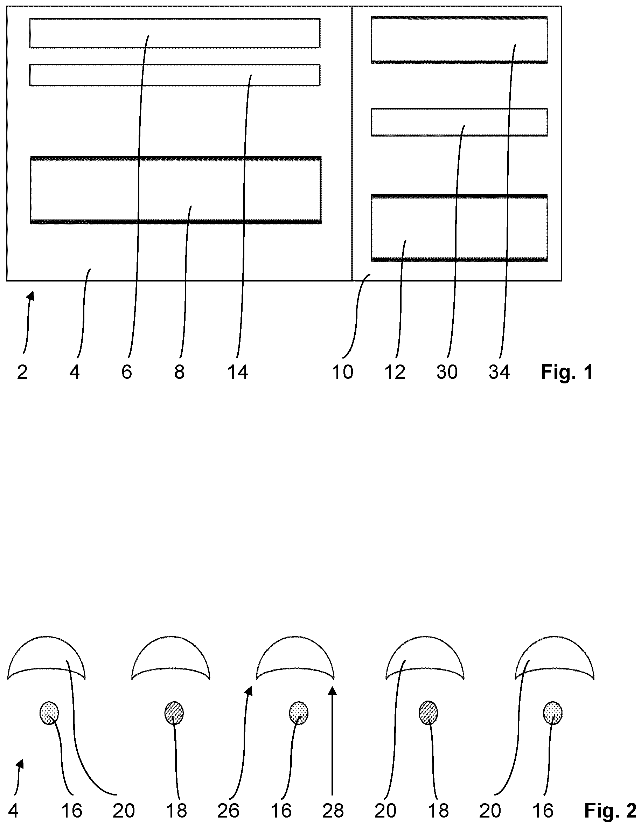

In den Fig. 1 bis 5 ist ein erstes Ausführungsbeispiel des erfindungsgemäßen Garsystems zur Durchführung des erfindungsgemäßen Verfahrens in insgesamt drei Varianten rein exemplarisch dargestellt.

Das Garsystem 2 des ersten Ausführungsbeispiels umfasst einen Grill 4 mit einem Grillrost 6 zur Auflage eines zu garenden, nicht dargestellten Garguts und einer unterhalb des Grillrosts 6 angeordneten Heizvorrichtung 8 zur Beheizung des Grillrosts 6, eine als Tischlüfter ausgebildete Dunstabzugsvorrichtung 10 mit einem Gebläse 12 zur Absaugung von über dem Grill 4 aufsteigenden, nicht dargestellten Wrasen und eine nicht dargestellte Steuerung zur Ansteuerung des Gebläses 12 der Dunstabzugsvorrichtung 10, wobei das Garsystem 2 eine mit der Steuerung signalübertragend verbundene Flammdetektionsvorrichtung 14 zur Detektion einer Flammenbildung an dem Grill 4 aufweist und das Gebläse 12 in Abhängigkeit einer Flammenbildung an dem Grill 4 mittels der Steuerung automatisch ausschaltbar ist.

Die Detektion der nicht dargestellten Flammen kann somit möglichst nahe an einer Stelle erfolgen, an der die Flammen entstehen könnten. Diese Stelle kann das Innere und/oder die Oberfläche des Grills 4 sein. Das Ergebnis einer mittels der Flammdetektionsvorrichtung 14 vorgenommenen Messung im oder am Grill 4, also das Ausgangssignal der Flammdetektionsvorrichtung 14, kann dann an die Steuerung zur Ansteuerung des Gebläses 12 der Dunstabzugsvorrichtung 10 weitergegeben werden. Dort wird auf dieses Ausgangssignal reagiert. Die Auswertung des Ausgangssignals kann im Grill 4, in der Dunstabzugsvorrichtung 10, beispielsweise im Gebläse 12, oder in einem nicht dargestellten dritten Gerät des Garsystems 2 stattfinden.

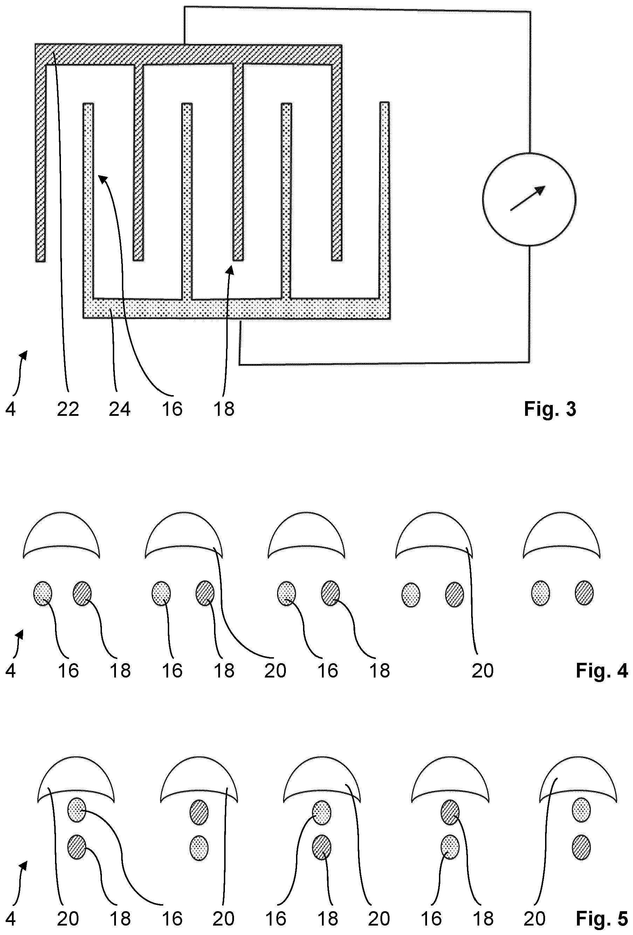

Die Flammdetektionsvorrichtung 14 ist hier auf Basis einer Ionisationsmessung ausgebildet. Dabei wird zwischen voneinander beabstandeten Messelektroden 16, 18 der Flammdetektionsvorrichtung 14 eine Wechselspannung angelegt. Wenn durch die Flamme eine lonisation eines zwischen den Messelektroden 16, 18 befindlichen, nicht dargestellten Gases erfolgt, kann dies beispielsweise anhand eines Stromflusses (AC und/oder DC) zwischen den Messelektroden 16, 18 detektiert werden. Die Messelektroden 16, 18 sind beispielsweise in den Fig. 2 und 3 dargestellt.

Die Flammdetektionsvorrichtung 14 ist somit an dem Grill 4 angeordnet, wobei die Flammdetektionsvorrichtung 14, jeweils mit Abstand, zwischen dem Grillrost 6 und der Heizvorrichtung 8 angeordnet ist. Die Flammdetektionsvorrichtung 14 ist derart unterhalb des Grillrosts 6 angeordnet, dass die Flammdetektionsvorrichtung 14, bezogen auf eine Draufsicht auf den Grillrost 6, im Wesentlichen von dem Grillrost 6 überdeckt ist. Die Messelektroden 16, 18 sind hier in einer einzigen Ebene unter Roststreben 20 des Grillrosts 6, nämlich mit einer einzigen Messelektrode 16, 18 pro Roststrebe 20, angeordnet.

Die Flammdetektionsvorrichtung 14 weist somit eine Mehrzahl von Messelektroden 16, 18 auf, wobei mindestens eine der Messelektroden 16, 18 jeweils unterhalb einer der Roststreben 20 der Mehrzahl von parallel zueinander angeordneten Roststreben 20 des Grillrosts 6 angeordnet ist, nämlich derart, dass die Mehrzahl der Messelektroden 16, 18 als mindestens zwei ineinandergreifende Kammstrukturen 22, 24 ausgebildet ist. Siehe hierzu die Fig. 2 und 3 in einer Zusammenschau. Zwischen den Messelektroden 16, 18 unter unmittelbar benachbarten Roststreben 20 wird eine Messspannung angelegt und der Stromfluss überwacht.

Um nur eine Messung für eine größere Fläche zu benötigen, können somit mehrere Messelektroden 16, 18 zusammengefasst werden. Dies kann zum Beispiel durch die ineinandergreifenden Kammstrukturen 22, 24 erfolgen. Die vorgenannte Messspannung wird zwischen den Kammstrukturen 22, 24 angelegt. Der resultierende Strom wird gemessen.

Ferner kann eine Doppel-Kammstruktur, wie in dem vorliegenden Ausführungsbeispiel, für die gesamte zu überwachende Fläche genutzt werden oder die zu überwachende Fläche wird auf mehrere derartige Doppelkammstrukturen aufgeteilt.

Die Roststreben 20 weisen hier an deren jeweiligen Längsseiten Abtropfkanten 26, 28 auf. Die Messelektroden inklusive gegebenenfalls vorhandener Signalübertragungsverbindungen der Kammstrukturen 22, 24 sind auf diese Weise gegen von oben herabtropfendes, nicht dargestelltem Fett durch die Roststreben 20 und einen die einzelnen Roststreben 20 verbindenden, nicht dargestellten Rahmen des Gitterrosts 6 geschützt. Die Abtropfkanten 26, 28 verhindern, dass das Fett entlang der Längsseiten der Roststreben 20 des Grillrosts 6 herabläuft und so auf die Messelektroden 16, 18 unterhalb der Roststreben 20 tropfen kann.

Gemäß der in der Fig. 4 dargestellten zweiten Variante des ersten Ausführungsbeispiels kann es vorgesehen sein, dass jeweils zwei benachbarte Messelektroden 16, 18 einem der Roststreben 20 zugeordnet sind. Wenn mehrere Messelektroden 16, 18 unter einer Roststrebe 20 des Grillrosts 6 positioniert werden, ist der Abstand zwischen unmittelbar benachbarten Messelektroden 16, 18 mit gegensätzlicher Polung geringer. Dies kann zu verringerten Anforderungen an die Messelektronik führen.

Alternativ zu der zweiten Variante gemäß Fig. 4 sieht eine dritte Variante des ersten Ausführungsbeispiels gemäß der Fig. 5 vor, dass mehrere Messelektroden 16, 18 untereinander oder schräg versetzt angeordnet werden. Auch so kann ein geringerer Abstand zwischen den direkt benachbarten Messelektroden 16, 18 erreicht werden als die Abstände zwischen den Roststreben 20 des Gitterrosts 6 bei einzelnen Messelektroden 16, 18 pro Roststrebe 20 zulassen.

Die Flammdetektionsvorrichtung 14 kann sich über die gesamte zu überwachende Fläche oder nur über mindestens eine Teilfläche der gesamten zu überwachenden Fläche des Grills 4 erstrecken. Wenn nur Teilflächen überwacht werden, müssen der Dunstabzugsvorrichtung 10 benachbarte Flächen des Grills 4 überwacht werden. Für die Messung sollte eine niedrige Spannung genutzt werden. Besonders vorteilhaft ist die Nutzung einer Sicherheitskleinspannung. Der Grillrost 6 kann zusätzlich als Berührschutz für die Messelektroden 16, 18 genutzt werden. Wenn der Grillrost 6 zusätzlich als Berührschutz genutzt wird, sollte der Abstand der Roststreben 20 des Grillrosts 6 nicht zu groß sein. Insbesondere sollte der vorgenannte Abstand geringer sein als ein typischer menschlicher Finger dick ist. Der Abstand der Messelektroden 16, 18 vom Grillrost 6 kann derart geringgehalten werden, um ferner eine Berührung mittels schräg zwischen den Roststreben 20 des Grillrosts 6 hindurchgeführter, nicht dargestellter Gegenstände zu unterbinden. Insbesondere wenn mehrere Messelektroden 16, 18 unterhalb einer Roststrebe 20 vorhanden sind, kann die Roststrebe 20, mit Blickrichtung von unten, konkav ausgeführt sein, so dass die Messelektroden 16, 18 von drei Seiten durch die Roststreben 20 des Gitterrosts 6 abgeschirmt sind. Siehe hierzu die Fig. 2, 4 und 5.

Die Messelektroden 16, 18 können mit dem Grillrost 6 verbunden sein. In einer bevorzugten Ausgestaltung können die Messelektroden 16, 18 für eine einfachere Reinigbarkeit des Grillrosts 6 eine vom eigentlichen Grillrost 6 getrennte Einheit bilden. Die Messelektroden oder die Kammstrukturen 22, 24 können an dem nicht dargestellten Rahmen des Grillrosts 6 befestigt sein, welcher auch Kontakte der Messelektroden 16, 18 zu der Steuerung enthält. Die vorgenannten, nicht dargestellten Kontakte zwischen dem Rahmen und der Steuerung können so ausgeführt sein, dass diese bei einem nicht montierten Rahmen gegen Berührung geschützt sind. Dies kann zum Beispiel durch eine gegenüber einer Oberfläche des Rahmens vertiefte Buchse mit einem geringen Durchmesser erfolgen. Es kann mittels eines nicht dargestellten Sensors oder mittels einer Auswertung elektrischer Kenngrößen, zum Beispiel der Kapazität, detektiert werden, ob die Flammdetektionsvorrichtung 14 angeschlossen ist. Bei elektrisch nicht angeschlossener Flammdetektionsvorrichtung 14 kann die Spannung ausgeschaltet werden. Der vorgenannte Rahmen kann über Führungselemente verfügen, welche geeignet sind, dass der Grillrost 6 nur in einer solchen Position aufgelegt werden kann, in der die Roststreben 20 des Grillrosts 6 und die Messelektroden 16, 18 zueinander passend ausgerichtet sind. Somit wäre die Flammdetektionsvorrichtung 14 an dem Grillrost 6 zum einen lösbar angeordnet, zum anderen wären die Flammdetektionsvorrichtung 14 auf der einen Seite und der Grillrost 6 auf der anderen Seite derart aufeinander abgestimmt ausgebildet, dass eine Montage der Flammdetektionsvorrichtung 14 an dem Grillrost 6 lediglich in einer vorher festgelegten Ausrichtung der Flammdetektionsvorrichtung 14 relativ zu dem Grillrost 6 möglich ist. Ferner kann der Grillrost 6 über leitfähige Kontakte auf dem Rahmen und/oder durch direkten Kontakt mit dem Grill 4 geerdet werden.

Um bei verbogenen Messelektroden 14 und/oder Roststäben 20 des Grillrosts 6 keinen elektrisch leitenden Kontakt zwischen Grillrost 6 und Messelektroden 16, 18 zu erhalten, können eine oder mehrere, nicht dargestellte elektrisch isolierende Elemente ganz oder teilweise zwischen den Messelektroden 16, 18 und dem Grillrost 6 angeordnet werden. Diese können an den Messelektroden 16, 18 und/oder dem Grillrost 6 und/oder einer separaten tragfähigen Struktur des Garsystems 2 befestigt sein. Somit ist zwischen dem Grillrost 6 und der Flammdetektionsvorrichtung 14 zusätzlich mindestens ein nicht dargestelltes Isoliermittel zur elektrischen Isolierung der Flammdetektionsvorrichtung 14 von dem Grillrost 6 angeordnet.

Als Entscheidungskriterium für die Fragestellung, ob eine Flamme vorliegt, können Grenzwerte für absolute Messwerte zum Beispiel für Strom und/oder Spannung genutzt werden. Alternativ kann die Messwertänderung über die Zeit ausgewertet und mit vorher festgelegten Grenzwerten verglichen werden.

Alternativ zu der Messung unterhalb der vorgenannten Roststreben 20 des Grillrosts 6 kann in einer anderen Ausführungsform der Erfindung unterhalb des Grillrosts ein feines Netz gespannt sein, welches die erfindungsgemäße Flammdetektionsvorrichtung integriert oder daran befestigt aufweist. Entsprechend ist hiermit beispielsweise die vorgenannte lonisationsmesstechnik mittels eingeflochtener oder aufgebrachter Leiter ermöglicht, zwischen denen eine Flammüberwachung mittels lonisation erfolgt. Alternativ zur Ionisationsmessung bei der Flammüberwachung mittels der Flammdetektionsvorrichtung ist beispielsweise auch die Verwendung einer Flammdetektionsvorrichtung mit verteilt angeordneten Temperatursensoren denkbar.

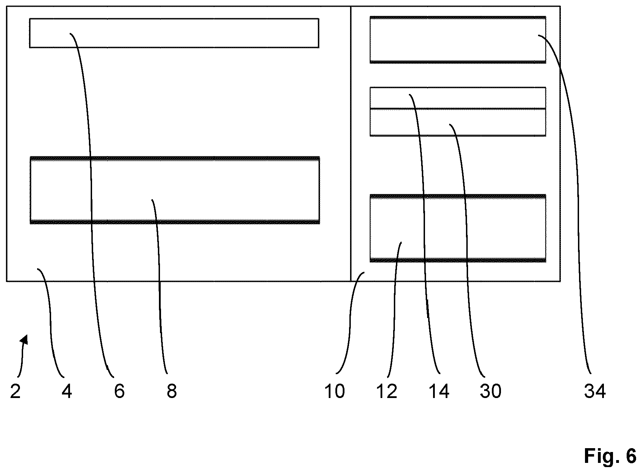

In den Fig. 6 bis 13 ist ein zweites Ausführungsbeispiel des erfindungsgemäßen Garsystems zur Durchführung des erfindungsgemäßen Verfahrens in insgesamt sieben Varianten dargestellt. Das zweite Ausführungsbeispiel wird lediglich anhand der Unterschiede zu dem ersten Ausführungsbeispiel erläutert. Ansonsten wird auf die obigen Ausführungen zu dem ersten Ausführungsbeispiel verwiesen. Gleiche oder gleichwirkende Bauteile sind mit den gleichen Bezugszeichen wie bei dem ersten Ausführungsbeispiel bezeichnet.

Bei dem zweiten Ausführungsbeispiel ist die Flammdetektionsvorrichtung 14 im Unterschied zu dem ersten Ausführungsbeispiel an der Dunstabzugsvorrichtung 10 angeordnet, wobei die Flammdetektionsvorrichtung 14 eine Mehrzahl von Messelektroden 16, 18 aufweist und die Mehrzahl der Messelektroden 16, 18 als mindestens zwei ineinandergreifende Kammstrukturen 22, 24 oder als voneinander beabstandete Flächenelektroden 22, 24 ausgebildet ist.

Die Detektion der Flammen kann somit möglichst nahe an einer Stelle erfolgen, an der die Flammen in die als Tischlüfter ausgebildete Dunstabzugsvorrichtung 10 eingezogen werden würden. Das kann an oder in der Dunstabzugsvorrichtung 10 sein. Die Ausgangssignale der Flammdetektionsvorrichtung 14 können direkt an die beispielsweise in der Dunstabzugsvorrichtung 10 integrierte Steuerung zur Ansteuerung des Motors des Gebläses 12 weitergegeben werden. Dort wird auf das Signal reagiert. Es muss beispielsweise keine Signalübertragung zwischen der in dem Grill 4 oder an anderer Stelle des Garsystems 2 angeordneten Steuerung und der Dunstabzugsvorrichtung 10 stattfinden.

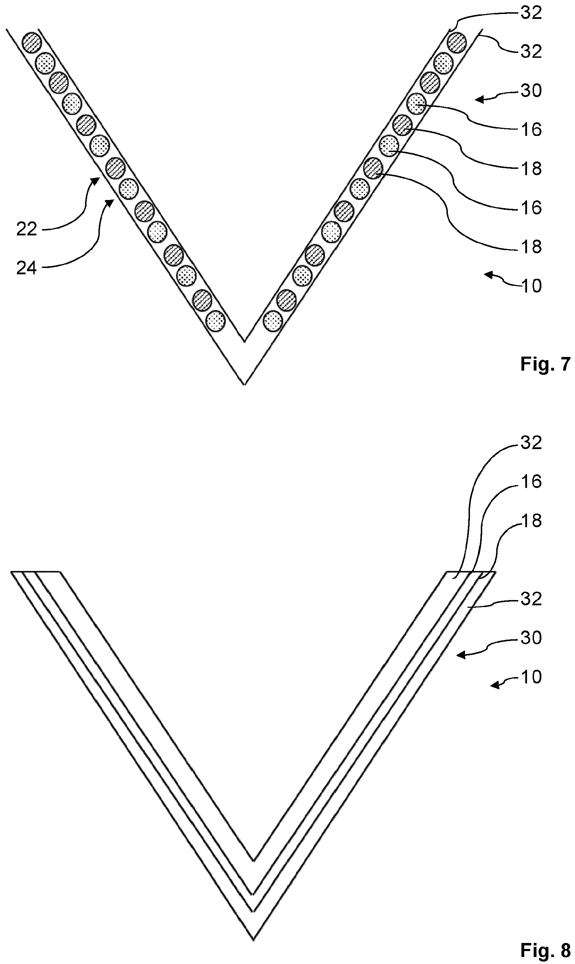

Gemäß einer in der Fig. 7 dargestellten ersten Variante des zweiten Ausführungsbeispiels ist die Flammdetektionsvorrichtung 14 an einem V-förmigen Fettfilter 30 der Dunstabzugsvorrichtung 10 angeordnet. Die Messelektroden 16, 18 können beispielsweise in einer Ebene zwischen Fettfilterlagen 32 und/oder über/unter den Fettfilterlagen angeordnet sein. Dabei können die Messelektroden 16, 18 wiederum in den vorgenannten Kammstrukturen 22, 24 angeordnet sein. Diese Kammstrukturen 22, 24 können parallel zum Fettfilter 30 angeordnet sein. Zwischen den Messelektroden 16, 18 wird wiederum Spannung angelegt und der Stromfluss überwacht. Um nur eine Messung für eine größere zu überwachende Fläche zu benötigen, können mehrere Messelektroden 16, 18 zusammengefasst werden. Dies kann zum Beispiel durch die vorgenannten ineinandergreifenden Kammstrukturen 22, 24 erfolgen. Die Spannung wird zwischen den Kammstrukturen 22, 24 angelegt. Der resultierende Strom wird gemessen. Es kann eine Doppel-Kammstruktur 22, 24 für die gesamte zu überwachende Fläche genutzt werden oder die zu überwachende Fläche wird auf mehrere Doppelkammstrukturen aufgeteilt. Bei der Anordnung der zwei oder mehr Messelektroden 16, 18 in zwei oder mehr parallelen Ebenen zwischen, neben oder unter den Fettfilterlagen 32 kann es sich auch um flächige Messelektroden 16, 18 handeln, die beispielsweise einen signifikanten von dem Wrasen zu durchströmenden Teil des Fettfilters 30 abdecken. Siehe hierzu die zweite Variante des zweiten Ausführungsbeispiels gemäß der Fig. 8. Die Messelektroden 16, 18 können zum Beispiel jeweils als Metallnetz ausgeprägt sein.

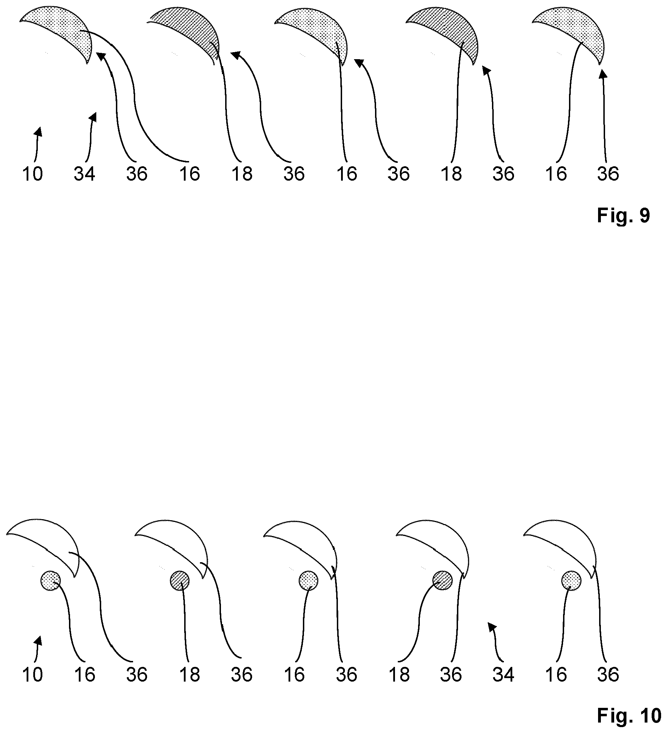

Die Flammdetektionsvorrichtung 14 kann alternativ dazu in einer dritten Variante des zweiten Ausführungsbeispiels an einer Wrasenleitvorrichtung 34 der Dunstabzugsvorrichtung 10 mit einer Mehrzahl von parallel zueinander angeordneten Leitstreben 36 angeordnet sein, wobei die Mehrzahl von Leitstreben 36 gleichzeitig als die Mehrzahl von Messelektroden 16, 18 ausgebildet ist. Siehe hierzu die Fig. 9. Die Leitstreben 36 werden als Messelektroden 16, 18 genutzt, so dass die Ionisation hier zwischen den Leitstreben 36 stattfindet.

Denkbar ist aber auch, dass bei der Flammdetektionsvorrichtung 14 in einer in der Fig. 10 dargestellten vierten Variante des zweiten Ausführungsbeispiels die Messelektroden 16, 18, analog zu der ersten bis dritten Variante des ersten Ausführungsbeispiels, in Strömungsrichtung des Wrasen nach den Leitstreben 36 angeordnet sind.

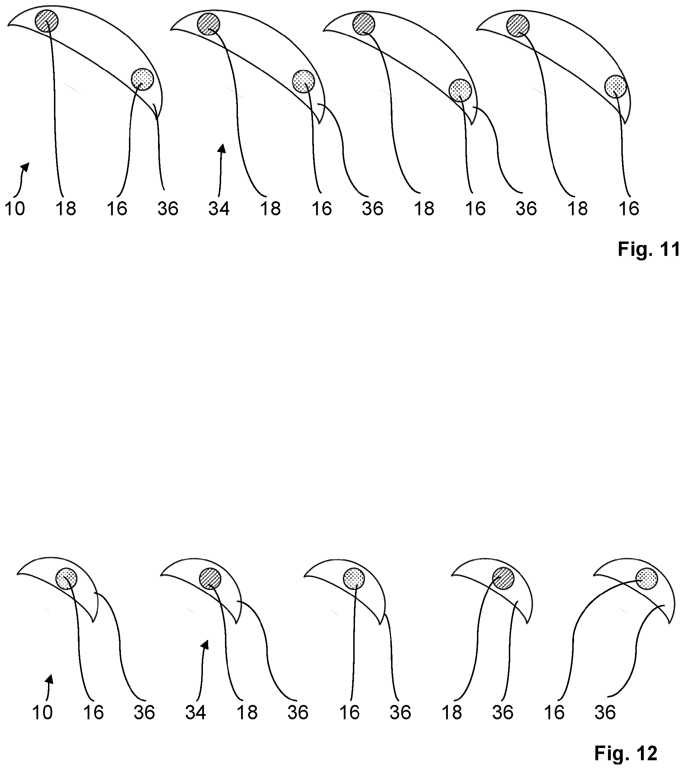

Gemäß der in der Fig. 11 dargestellten fünften Variante des zweiten Ausführungsbeispiels ist mindestens eine der Messelektroden 16, 18 an oder in mindestens einer der Leitstreben 36 angeordnet. Wie aus der in der Fig. 12 dargestellten sechsten Variante des zweiten Ausführungsbeispiels ersichtlich ist, können bei einem Wrasenleitelement 34 mit um eine Drehachse drehbaren Leitstreben 36, diese Drehachsen als die Messelektroden 16, 18 genutzt werden.

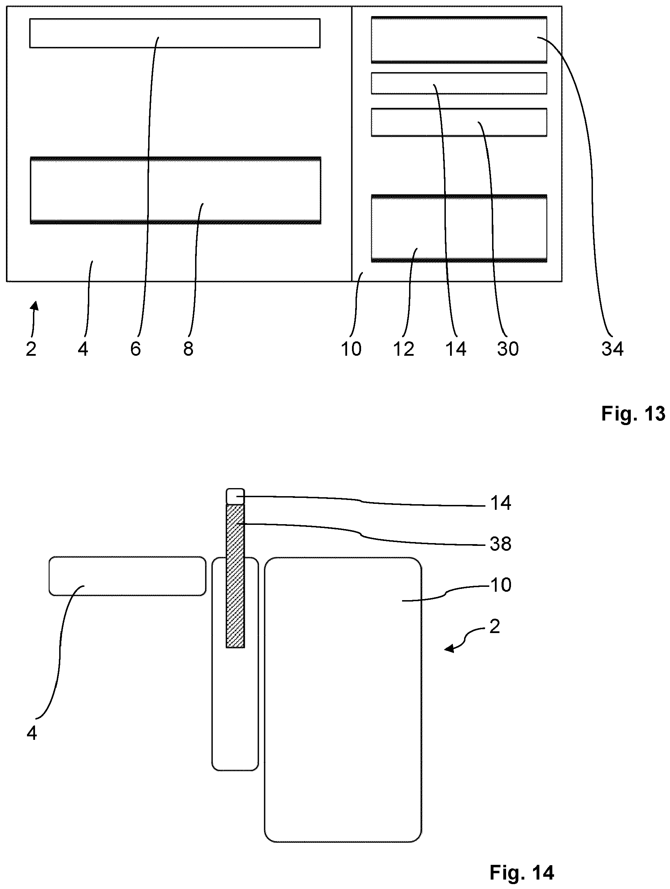

Die Flammdetektionsvorrichtung 14 kann gemäß der in der Fig. 13 dargestellten siebten Variante des zweiten Ausführungsbeispiels als eine separate Flammdetektionsvorrichtung 14 zwischen der Wrasenleitvorrichtung 36 und dem Fettfilter 30 angeordnet sein, wobei die separate Flammdetektionsvorrichtung 14 klappbar oder verschiebbar an einem Rest der Dunstabzugsvorrichtung 10 angeordnet ist. Gemäß Fig. 13 kann die separate Flammdetektionsvorrichtung 14 an einer Wand der Dunstabzugsvorrichtung 10 oder, gemäß der Fig. 6, alternativ an einem Trägermaterial des Fettfilters 30 befestigt sein. Bei einer Befestigung an einem entnehmbaren Fettfilter kann die Flammdetektionsvorrichtung mit diesem Fettfilter entnommen werden. Die in der Fig. 13 nicht dargestellten Messelektroden sind an oder in einem Rest der separaten Flammdetektionsvorrichtung 14 beispielsweise nebeneinander und/oder untereinander angeordnet. Die separate Flammdetektionsvorrichtung 14 kann, wie oben bereits ausgeführt, entnehmbar, klappbar, verschiebbar, geteilt klappbar oder geteilt schiebbar sein.

Ferner kann die Flammdetektionsvorrichtung 14 gemäß des in der Fig. 14 dargestellten dritten Ausführungsbeispiels zwischen dem Grill 4 und der Dunstabzugsvorrichtung 10 angeordnet sein, wobei die Flammdetektionsvorrichtung 14 an einem Zubehörteil 38 des Garsystems 2 befestigt ist, nämlich derart, dass die Flammdetektionsvorrichtung 14 an einem als Strömungshindernis zwischen dem Grill 4 auf der einen Seite und der Dunstabzugsvorrichtung 10 auf der anderen Seite ausgebildeten, vorzugsweise lösbaren, klappbaren oder verschiebbaren, Zubehörteil 38 des Grillsystems 2 angeordnet ist.

Dieses dritte Ausführungsbeispiel bietet den Vorteil, dass kleinere Flammen im und am Grill 4, zum Beispiel durch kleine herabtropfende Fettspritzer ausgelöst, nicht sofort zum Abschalten der Dunstabzugsvorrichtung 10, nämlich des Gebläses 12, führen, wie dies beispielsweise bei dem ersten Ausführungsbeispiel der Fall sein kann. Ferner muss die Flamme für eine Detektion mittels der Flammdetektionsvorrichtung 14 beispielsweise nicht bis zum Fettfilter 30 vordringen. Darüber hinaus ist das erfindungsgemäße Garsystem 2 gemäß des dritten Ausführungsbeispiels leicht nachrüstbar. Die in der Fig. 14 nicht dargestellten Messelektroden sind an einem Rest der Flammdetektionsvorrichtung 14 nebeneinander und/oder untereinander angeordnet. Das Zubehörteil 38 kann beispielsweise entnehmbar, zum Beispiel als aufstellbare Barriere mit integrierter Flammdetektionsvorrichtung 14, ausgebildet sein. Das als Barriere ausgebildete Zubehörteil 38 ist somit als ein Strömungshindernis für den Wrasen zwischen einerseits dem Grill 4 und andererseits der Dunstabzugsvorrichtung 10 ausgebildet. Das Zubehörteil kann auch klappbar sein, zum Beispiel als klappbare Barriere, die im Betrieb des Garsystems beispielsweise über eine Feder mit einer Art push-pull Mechanismus hochgeklappt wird und bei Nichtbenutzung des Garsystems 2 heruntergeklappt werden kann. Ferner kann das Zubehörteil 38 verschiebbar sein, zum Beispiel kann das Zubehörteil 38 vertikal, also in der Bildebene der Fig. 14 von oben nach unten, versenkbar zwischen Grill 4 und als Tischlüfter ausgebildeter Dunstabzugsvorrichtung 10 angeordnet sein. Das vorgenannte Versenken des Zubehörteils 38 kann nach Art einer Push-Pull-Vorrichtung oder mittels eines motorischen Antriebs erfolgen. Darüber hinaus ist es auch möglich, dass das Zubehörteil geteilt verschiebbar, zum Beispiel mit nach Art einer Ziehharmonika aufklappenden Lamellen, ausgebildet ist. Ebenso sind relativ zueinander verschiebbare Lamellen denkbar, um eine geringere Einbautiefe zu ermöglichen. Das Ausgangssignal der Flammdetektionsvorrichtung 14 muss hier allerdings von der separaten Flammdetektionsvorrichtung 14 zu der als Tischlüfter ausgebildeten Dunstabzugsvorrichtung 10 mit der beispielsweise darin angeordneten Steuerung übertragen werden. Dies kann drahtgebunden oder drahtlos erfolgen.

In allen oben erläuterten Ausführungsbeispielen wird das Gebläse 12 der Dunstabzugsvorrichtung 10 in Abhängigkeit einer mittels der Flammdetektionsvorrichtung 14 detektierten Flammenbildung an dem Grill 4 mittels der Steuerung automatisch ausgeschaltet.

Um langfristig sicherzustellen, dass die Funktionsfähigkeit der Flammdetektionsvorrichtung 14 gewährleistet ist und nicht zum Beispiel durch eine Fettschicht auf den Messelektroden 16, 18 beeinträchtigt wird, kann eine automatische Funktionsüberwachung erfolgen. Die Funktionsüberwachung kann permanent und/oder bei dem Start des Garsystems 2 und/oder in definierten zeitlichen Abständen und/oder nach definierten Ereignissen, zum Beispiel wenn der Grill 4 eingeschaltet wird und/oder bei Einstellung einer für das Grillen typischen Leistungsstufe des Gebläses 12 der Dunstabzugsvorrichtung 10, die Funktion der Flammdetektionsvorrichtung 14 überprüfen. Es erfolgt also in vorher festgelegten Betriebszuständen des Garsystems 2 und/oder in vorher festgelegten Zeitabständen und/oder bei eingeschaltetem Garsystem 2 kontinuierlich mittels der Steuerung eine automatische Funktionskontrolle zur Erkennung der Funktionsfähigkeit des Garsystems 2, insbesondere der Flammdetektionsvorrichtung 14.

Ein Beispiel für eine Funktionsüberwachung ist die Messung der Kapazität eines nicht dargestellten Systems mit zwei oder mehr Kondensatorelektroden, wodurch der Einfluss einer Verschmutzung der Messelektroden 16, 18 und insbesondere der Einfluss von dicken Fettschichten ermittelbar ist. Dieses System wird im Folgenden Kondensator genannt.

Dabei können die Messelektroden 16, 18 als die vorgenannten Kondensatorelektroden genutzt werden, welche auch für die Flammdetektion genutzt werden. Alternativ können Kombinationen aus Messelektroden, welche zur Flammdetektion genutzt werden, und zusätzlichen Kondensatorelektroden genutzt werden. Die zusätzlichen Kondensatorelektroden können zum Beispiel durch eine geeignete Abschirmeinrichtung gegen eine Verschmutzung geschützt sein. Eine massive Verschmutzung der vorgenannten Elektroden beeinflusst die Kapazität des im Wesentlichen aus diesen Elektroden gebildeten Kondensators. Dies kann beispielsweise anhand der Messung der Eigenfrequenz eines den Kondensator beinhaltenden Schwingkreises detektiert werden. Alternativ kann eine Messung der maximalen Kapazität, des Aufladeverhaltens oder dergleichen mittels AC- und/oder DC-Messtechnik erfolgen.

Anstelle der Kapazität kann auch eine Erwärmung der dann mindestens einen Elektrode gemessen werden. Hierbei wird der Temperaturgradient oder die nach einem definierten Heizprozess erreichte Temperatur gemessen, wobei die Elektrode zum Beispiel durch einen Stromfluss durch die Elektrode oder eine externe Wärmequelle, beispielsweise unter Nutzung der Heizvorrichtung des Grills, erwärmt werden. Dann wird die Temperatur zum Beispiel durch Messung des temperaturabhängigen Widerstands oder durch zusätzliche Sensoren, welche thermisch leitfähig mit der Elektrode verbunden sind, gemessen. Besonders geeignet sind hierfür relativ dünne Drähte oder Bleche, da sie eine geringe Wärmekapazität haben, so dass der Einfluss einer Fettschicht auf die Wärmekapazität des Systems oder auf die Wärmeaufnahme des Systems nicht durch eine hohe Wärmekapazität signaltechnisch verdeckt wird.

Ferner kann auch ein Abkühlen der Elektrode in einem Luftstrom gemessen werden. Wenn sich die Elektrode in einem Luftstrom, beispielsweise in der Dunstabzugsvorrichtung, befindet, kann zum Beispiel über einen Strom durch die Elektrode eine definierte Heizleistung die Elektrode erwärmen. In Abhängigkeit von Luftstrom, Temperatur der Luft, Heizleistung, Abstrahleigenschaften der Elektrode wird sich eine Temperatur einstellen. Eine Fettschicht kann die Abstrahleigenschaften der Elektrode und/oder den Wärmeübergang zur Luft beeinflussen, beispielsweise wirkt die Fettschicht dämmend. Dadurch stellt sich bei einer stark verfetteten Elektrode eine andere Temperatur ein als bei einer sauberen Elektrode.

Darüber hinaus kann, wenn die Spannung zwischen zwei Elektroden mit geringem Abstand erhöht wird, gemessen werden, wie durch Schmutz und insbesondere eine Fettschicht auf den Elektroden die Leitfähigkeit von Elektrode - Schmutz - Luft - Schmutz - Elektrode beeinflusst wird. Dies ist insbesondere dann der Fall, wenn durch die Verschmutzung eine direkte Verbindung zwischen den Elektroden geschaffen wurde. Um dies zu detektieren, kann bei einer vorgegebenen Spannung der Widerstand/Strom gemessen werden. Alternativ kann die Spannung variiert werden und die daraus resultierende Variation des Widerstands/Stroms gemessen werden. Die Messung kann mit AC und/oder DC durchgeführt werden. Die Spannung kann so weit erhöht werden, bis ein Überschlag erfolgt.

Wenn eine Elektrode verfettet, kann dies die Funktion der Flammdetektionsvorrichtung 14 beeinträchtigen. Daher kann eine Reinigungsfunktion für die Entfernung von Fett von den Messelektroden 16, 18 eingesetzt werden, um die Funktion der Flammdetektionsvorrichtung 14 dauerhaft zu gewährleisten. Zum Beispiel kann das Fett durch eine Erwärmung der Messelektroden 16, 18 auf eine Temperatur, bei der Fettrückstände zersetzt werden, entfernt werden. Dafür müssen sich die Messelektroden 16, 18 in einem gegen Berührung geschützten Bereich ohne brennbares Material befinden. Dies ist zum Beispiel unterhalb des Grillrosts 6 der Fall. Die Erwärmung kann durch die Heizvorrichtung 8 und/oder eine Eigenerwärmung der Messelektroden 16, 18 durch einen Stromfluss erfolgen. Somit erfolgt nach der Erkennung einer ungenügenden Funktionsfähigkeit des Garsystems 2, insbesondere der Flammdetektionsvorrichtung 14, mittels der Steuerung eine automatische Funktionswiederherstellung zur Herstellung dieser Funktionsfähigkeit.

Die Dunstabzugsvorrichtung 10 kann mittels eines Kabels und/oder kabellos mit dem Grill 4 signalübertragend verbunden sein. Die Dunstabzugsvorrichtung 10 kann über einen Betriebsmodus für einen Kombibetrieb mit dem Grill 4 verfügen. Um ein Versagen der Flammdetektionsvorrichtung 14 bei einem Versagen der vorgenannten Kommunikation zu vermeiden, kann der Betriebsmodus vorsehen, dass das Gebläse 12 nur dann funktioniert, wenn die Flammdetektionsvorrichtung 14 aktiv meldet, dass keine Gefahr besteht. Wenn die Verbindung zu der Steuerung im Grill 4 und/oder einem Rest des Garsystems 2 verloren geht und/oder die beispielsweise in der Dunstabzugsvorrichtung 10 integrierte Steuerung keine plausiblen aktuellen Messwerte von der Flammdetektionsvorrichtung 14 im Grill 4 erhält, werden Maßnahmen zur Gewährleistung der Sicherheit getroffen. Dabei kann es sich um eine oder mehrere der folgenden Maßnahmen handeln: Die Dunstabzugsvorrichtung 10 startet nicht. Das Gebläse 12 wird ausgeschaltet. Die Dunstabzugsvorrichtung 10 führt einen Schnell-Stopp aus, bei dem nicht nur eine Stromversorgung des Gebläses 12 gestoppt wird, sondern durch eine geeignete Ansteuerung des Motors des Gebläses 12 aktiv zum Stillstand gebracht wird. Die Dunstabzugsvorrichtung 10 wird durch das Verschließen einer Einsaugöffnung der Dunstabzugsvorrichtung 10 für Wrasen und/oder das Hochfahren oder das Hochklappen der Leitstreben 36 der Wrasenleitvorrichtung 34 der Dunstabzugsvorrichtung 10 oder ähnliche Maßnahmen, welche das Einsaugen von Flammen in die Dunstabzugsvorrichtung 10 verhindern oder den Umfang von potentiell eingesaugten Flammen verringern und/oder die Wahrscheinlichkeit, dass eine Flamme eingesaugt wird, verringern, gesichert. Optional kann in allen vorgenannten Fällen eine Fehlermeldung am Grill 4 und/oder an der Dunstabzugsvorrichtung 10 und/oder einem dritten mit dem Grill 4 und/oder der Dunstabzugsvorrichtung 10 signalübertragend verbundenem Gerät des Grillsystems, zum Beispiel einer App auf einem Tablet/Smartphone oder einer Anzeige an einem weiteren Küchengerät oder dergleichen, angezeigt werden. Eine Kombination der genannten Ansätze führt zu einer schnellstmöglichen Abwendung der Gefahr.

Wenn die Flammdetektionsvorrichtung 14 meldet, dass keine Flammen detektiert werden, kann beispielsweise der manuelle Start des Gebläses 12 freigeschaltet werden. Bevorzugt wird die Dunstabzugsvorrichtung 10 ohne Nutzereingriff automatisch wieder in den Betriebszustand versetzt, in dem es vor der Detektion einer Flamme war. Dadurch wird gewährleistet, dass der Nutzer nicht durch häufiges manuelles Starten des Gebläses 12 verärgert wird.

Wenn mehrmals innerhalb einer definierten Zeit ein Stopp der Dunstabzugsvorrichtung 10, nämlich des Gebläses 12, aufgrund von Flammenbildung notwendig wird, kann ein Hinweis an den Nutzer erfolgen, dass für das aktuell gegrillte Lebensmittel, also das nicht dargestellte Grillgut, die Nutzung einer nicht dargestellten Fettauffangschale sinnvoll sei.

## Patentansprüche

1. Garsystem (2), umfassend einen Grill (4) mit einem Grillrost (6) zur Auflage eines zu garenden Garguts und einer unterhalb des Grillrosts (6) angeordneten Heizvorrichtung (8) zur Beheizung des Grillrosts (6), eine Dunstabzugsvorrichtung (10) mit einem Gebläse (12) zur Absaugung von über dem Grill (4) aufsteigenden Wrasen und eine Steuerung zur Ansteuerung des Gebläses (12) der Dunstabzugsvorrichtung (10), wobei das Garsystem (2) eine mit der Steuerung signalübertragend verbundene Flammdetektionsvorrichtung (14) zur Detektion einer Flammenbildung an dem Grill (4) aufweist und das Gebläse (12) in Abhängigkeit einer Flammenbildung an dem Grill (4) mittels der Steuerung automatisch ausschaltbar ist.

2. Garsystem (2) nach Anspruch 1, **dadurch gekennzeichnet, dass** die Flammdetektionsvorrichtung (14) auf Basis einer Ionisationsmessung ausgebildet ist.

3. Garsystem (2) nach Anspruch 1 oder 2, **dadurch gekennzeichnet, dass** die Flammdetektionsvorrichtung (14) an dem Grill (4) angeordnet ist, bevorzugt, dass die Flammdetektionsvorrichtung (14), jeweils mit Abstand, zwischen dem Grillrost (6) und der Heizvorrichtung (8) angeordnet ist, besonders bevorzugt, dass die Flammdetektionsvorrichtung (14) derart unterhalb des Grillrosts (6) angeordnet ist, dass die Flammdetektionsvorrichtung (14), bezogen auf eine Draufsicht auf den Grillrost (6), im Wesentlichen von dem Grillrost (6) überdeckt ist.

4. Garsystem (2) nach Anspruch 3, **dadurch gekennzeichnet, dass** die Flammdetektionsvorrichtung (14) eine Mehrzahl von Messelektroden (16, 18) aufweist, wobei mindestens eine der Messelektroden (16, 18) jeweils unterhalb einer Roststrebe (20) der Mehrzahl von parallel zueinander angeordneten Roststreben (20) des Grillrosts (6) angeordnet ist, bevorzugt, dass die Mehrzahl der Messelektroden (16, 18) als mindestens zwei ineinandergreifende Kammstrukturen (22, 24) ausgebildet ist, besonders bevorzugt, dass jeweils zwei benachbarte Messelektroden (16, 18) einer der Roststreben (20) zugeordnet sind.

5. Garsystem (2) nach Anspruch 4, **dadurch gekennzeichnet, dass** die Roststreben (20) an deren jeweiligen Längsseiten Abtropfkanten (26, 28) aufweisen.

6. Garsystem (2) nach Anspruch 4 oder 5, **dadurch gekennzeichnet, dass** die Roststreben (20) zueinander mindestens derart eng beabstandet angeordnet sind, dass ein Hindurchstecken eines menschlichen Fingers zwischen zwei benachbarten Roststreben (20) wirksam verhindert ist.

7. Garsystem (2) nach einem der Ansprüche 3 bis 6, **dadurch gekennzeichnet, dass** zwischen dem Grillrost (6) und der Flammdetektionsvorrichtung (14) zusätzlich mindestens ein Isoliermittel zur elektrischen Isolierung der Flammdetektionsvorrichtung (14) von dem Grillrost (6) angeordnet ist.

8. Garsystem (2) nach Anspruch 1 oder 2, **dadurch gekennzeichnet, dass** die Flammdetektionsvorrichtung (14) an der Dunstabzugsvorrichtung (10) angeordnet ist, bevorzugt, dass die Flammdetektionsvorrichtung (14) eine Mehrzahl von Messelektroden (16, 18) aufweist, wobei die Mehrzahl der Messelektroden (16, 18) als mindestens zwei ineinandergreifende Kammstrukturen (22, 24) oder als voneinander beabstandete Flächenelektroden (16, 18) ausgebildet ist.

9. Garsystem (2) nach Anspruch 8, **dadurch gekennzeichnet, dass** die Flammdetektionsvorrichtung (14) an einem Fettfilter (30) der Dunstabzugsvorrichtung (10) oder an einer Wrasenleitvorrichtung (34) der Dunstabzugsvorrichtung (10) mit einer Mehrzahl von parallel zueinander angeordneten Leitstreben (36) angeordnet ist, bevorzugt, dass die Mehrzahl von Leitstreben (36) gleichzeitig als die Mehrzahl von Messelektroden (16, 18) ausgebildet ist oder jeweils mindestens eine der Messelektroden (16, 18) an oder in mindestens einer der Leitstreben (36) angeordnet ist.

10. Garsystem (2) nach Anspruch 8, **dadurch gekennzeichnet, dass** die Flammdetektionsvorrichtung (14) als eine separate Flammdetektionsvorrichtung (14) zwischen der Wrasenleitvorrichtung (34) und dem Fettfilter (30) angeordnet ist, bevorzugt, dass die separate Flammdetektionsvorrichtung (14) klappbar oder verschiebbar an einem Rest der Dunstabzugsvorrichtung (10) befestigt ist, besonders bevorzugt, dass die separate Flammdetektionsvorrichtung (14) an dem als entnehmbarer Fettfilter ausgebildeten Fettfilter (30) befestigt ist.

11. Garsystem (2) nach Anspruch 1 oder 2, **dadurch gekennzeichnet, dass** die Flammdetektionsvorrichtung (14) zwischen dem Grill (4) und der Dunstabzugsvorrichtung (10) angeordnet ist, bevorzugt, dass die Flammdetektionsvorrichtung (14) an einem Zubehörteil (38) des Garsystems (2) angeordnet ist, besonders bevorzugt, dass die Flammdetektionsvorrichtung (14) an einem als Strömungshindernis zwischen dem Grill (4) auf der einen Seite und der Dunstabzugsvorrichtung (10) auf der anderen Seite ausgebildeten, vorzugsweise lösbaren, klappbaren oder verschiebbaren, Zubehörteil (38) angeordnet ist.

12. Garsystem (2) nach einem der Ansprüche 1 bis 11, **dadurch gekennzeichnet, dass** die Flammdetektionsvorrichtung (14) an dem Grillrost (6), der Dunstabzugsvorrichtung (10) oder dem Zubehörteil (38) lösbar angeordnet ist, bevorzugt, dass die Flammdetektionsvorrichtung (14) auf der einen Seite und der Grillrost (6), die Dunstabzugsvorrichtung (10) oder das Zubehörteil (38) auf der anderen Seite derart aufeinander abgestimmt ausgebildet sind, dass eine Montage der Flammdetektionsvorrichtung (14) an dem Grillrost (6), der Dunstabzugsvorrichtung (10) oder dem Zubehörteil (38) lediglich in einer vorher festgelegten Ausrichtung der Flammdetektionsvorrichtung (14) relativ zu dem Grillrost (6), der Dunstabzugsvorrichtung (10) oder dem Zubehörteil (38) möglich ist.

13. Verfahren zum Betrieb eines Garsystems (2) nach einem der Ansprüche 1 bis 12, wonach das Gebläse (12) der Dunstabzugsvorrichtung (10) in Abhängigkeit einer mittels der Flammdetektionsvorrichtung (14) detektierten Flammenbildung an dem Grill (4) mittels der Steuerung automatisch ausgeschaltet wird.

14. Verfahren nach Anspruch 13, **dadurch gekennzeichnet, dass** in vorher festgelegten Betriebszuständen des Garsystems (2) und/oder in vorher festgelegten Zeitabständen und/oder bei eingeschaltetem Garsystem (2) kontinuierlich mittels der Steuerung eine Funktionskontrolle zur Erkennung der Funktionsfähigkeit des Garsystems (2), insbesondere der Flammdetektionsvorrichtung (14), automatisch erfolgt.

15. Verfahren nach Anspruch 14, **dadurch gekennzeichnet, dass** nach erfolgter Erkennung einer ungenügenden Funktionsfähigkeit des Garsystems (2), insbesondere der Flammdetektionsvorrichtung (14), mittels der Steuerung eine Funktionswiederherstellung zur Herstellung dieser Funktionsfähigkeit automatisch erfolgt.
